Europäisches Patentamt

European Patent Office

Office européen des brevets

(19)

(11) EP 0 321 016 B1

(12) **EUROPEAN PATENT SPECIFICATION**

(45) Date of publication and mention
of the grant of the patent:
**17.01.1996  Bulletin 1996/03**

(51) Int Cl.[6]: **G01F 1/20**, G01F 1/30,
G01F 1/78

(21) Application number: **88202725.3**

(22) Date of filing: **30.11.1988**

(54) **A device for measuring continuously the mass flow rate of particulate material**

Eine Vorrichtung zum kontinuierlichen Messen des Massendurchflusses von Partikeln

Un dispositif pour mesurer en continu le débit massique d'une matière en particules

(84) Designated Contracting States:
**AT BE CH DE ES FR GB GR LI LU NL SE**

(30) Priority: **16.12.1987 IT 2303287**

(43) Date of publication of application:
**21.06.1989  Bulletin 1989/25**

(73) Proprietor: **ENIRICERCHE S.p.A.**
**I-20121 Milan (IT)**

(72) Inventors:
  • **Arrigoni, Virgilio**
    **I-20159 Milan (IT)**
  • **Pistone, Luigi**
    **I-20097 San Donato Milanese, Milan (IT)**

(74) Representative: **Fusina, Gerolamo et al**
**I-20121 Milano (IT)**

(56) References cited:
DE-A- 3 230 794          NL-A- 7 003 867
US-A- 3 824 855          US-A- 3 889 534

• **MEASUREMENT AND CONTROL, vol. 16, no. 1,
January 1983, pages 9-13, Dorking, GB; R.S.
MEDLOCK: "The techniques of flow
measurement (Part 2)"**
• **ADVANCES IN
INSTRUMENTATION-PROCEEDINGS OF THE
24TH ANNUAL ISA CONFERENCE, Houston,
27th-30th October 1969, vol. 24, part 1, pages
529-1 - 529-5, Instrument Society of America,
Pittsburgh, US; J.J. RUSNAK: "A linear
momentum mass flowmeter"**

## Description

This invention relates to a device for measuring continuously the mass flow rate of particulate material (powders and/or granulated material). At the present time, for carrying out such measurements use is made quite often of systems that employ conveyor belts provided with suitable loading cells or of analogous systems employing Archimedean screws.

Moreover, some other measuring devices are also known which are based on the detection of the force from the momentum of the material falling at a known velocity onto a plate which is called "the bouncing plate".

Devices were also proposed which were based on forces arising from Coriolis acceleration in a vibrating U-tube through which the material is flowing.

The previous devices mentioned above are bulky and they are not always employable (for instance, they cannot be employed in plants with pneumatic conveyance).

Devices employing the so-called bouncing plate require the knowledge of the impact velocity: but that is not always possible and anyway can introduce a very large inaccuracy factor in the case of changes in the granulometric characteristics and/or in density of the particulate solid.

Devices based on the determination of Coriolis acceleration are generally hard to adapt to the plant and in addition they are delicate and costly.

For example, the article "The techniques of flow measurement" (R.S.Medlock, Measurement and Control, vol.16, no.1, Jan.1983 p.9-13, Dorking GB) discloses oscillated torsion plate type flowmeters and several other embodiments but those regarding solids-entraining stream, are compelled to know the fall velocity of the material.

A second article "A linear momentum mass flowmeter" (J.J.Rusnack, Advances in Instrumentation - Proc. of the 24th Annual Conference, Houston 27-30 Oct.1969, vol.24, part 1, pages 529-1 to 529-5, Instrument Society of America, Pittsburgh US.) refers to many different flowmeters, all of fluid dynamic kind.

US-A-3 824 855 discloses a flowmeter with an oscillating member of somewhat similar from to that of the present application, and a flow-dividing baffle. The member is, however, not driven into oscillation.

Now a device has been invented that overcomes the drawbacks mentioned above and is based on the detection of momentum, in which device some suitable innovations make the whole system independent of the impact velocity of the material.

Therefore the present invention relates to device for continuously measuring the mass flow rate of particulate material comprising :

- a duct or pipe,
- a member comprising at least one flat surface, and mounted for oscillation about an axis perpendicular to the longitudinal axis of the duct or pipe;
- drive means arranged to cause said member to oscillate at a predetermined amplitude and frequency about said axis ;
- means arranged to measure the instantaneous value of the torque arising from the interaction between the motion of said member and that of the particles of said particulate material impinging thereon, and
- means for processing said signal,

characterized in that

- said member comprises two plate-like parts, each having a flat surface, said parts being rigidly connected to one another along a line which is also the axis of oscillation of said member, said parts respectively sloping at an angle of from 2° to 30° away of a plane containing both the longitudinal axis of the pipe and said axis of oscillation,

  said duct or pipe comprising an upstream and a downstream portion of a predetermined cross-sectional area and an intermediate portion therebetween, having a cross sectional area larger than said predetermined cross sectional area,
  said member being mounted within said intermediate portion and being dimensioned to extend across said intermediate portion to occupy at least said predetermined cross sectional area,
  a baffle arranged upstream of said member relative to the direction of flow of said particulate material to split the mass of said particulate material into two equal streams,
  said baffle being of substantially triangular cross section in a plane parallel to the axis of the duct or pipe and perpendicular to the axis of oscillation of the member, and said baffle extending at its apex into said upstream portion of the duct or pipe.

The oscillatory motion of predetermined constant, and preferably constant, values of amplitude and frequency, to which said plate is forced can be for instance the sinusoidal motion.

The surfaces which the plate consists of are, as mentioned above, at least partially sloping as they are completely inclined or they are partially inclined and partially horizontal (i.e., for instance connecting with a single plane surface the respective inclined surfaces).

The arrangement with partially inclined surfaces is preferred: however, with this arrangement a baffle is to be placed before the plate so that the particles, dividing into two streams, do not impinge onto the plane connecting surface.

Said baffle can be in the shape of an isosceles triangle when cross-sectioned at right angles to the axis of motion of the plate, the semiangle at the lower apex of the rest angle of the particulate material being preferably between 2° and 8°.

The angle between the plane passing through the ends of the sloping part of the single inclined surface and the plane parallel to the duct or pipe axis and comprising the axis of motion of the plates is preferably selected between 2° and 30°.

The particulate material whose flow rate is to be determined is preferably of particle size of the order of the mm, whereas the duct through which said material flows can be vertical or at a slope or horizontal (for instance with pneumatic conveyance).

As essentially all particles of the particulate material are to impinge onto the two inclined surfaces, said two surfaces are to be designed so that their section occupies at least the same passage cross-section of the duct or pipe; such condition requires a suitable increase of the duct or pipe section at the point where the device itself is inserted. The sloping surfaces can be plane, concave or convex.

The plane sloping surface is preferred and is to be chosen mainly in the case when the distribution of the particles of the particulate material is not homogeneous.

The material which the plate is made up of must resist abrasion and must be sufficiently rigid.

The transverse section of the duct or pipe has preferably to admit one or more symmetry axes, and the axis of motion of the plate is to be parallel to one of said axes. For instance, said section can be circular or rectangular in shape.

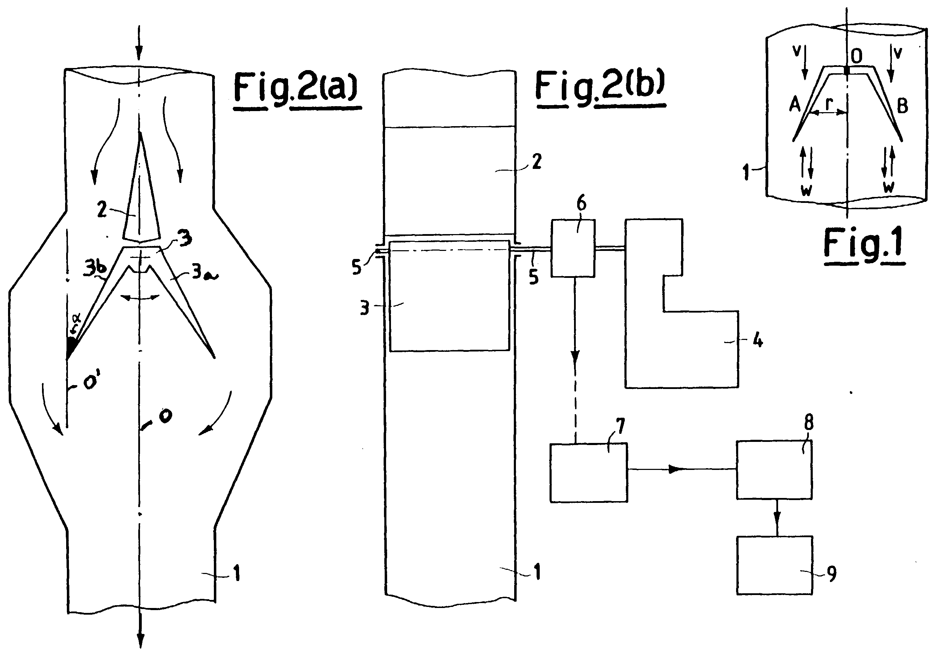

With reference to the diagram shown in Figure 1 illustrating the operating principle of the device, the measuring procedure is disclosed in the following.

The system consisting of the surfaces A and B, rigidly connected to each other, moves within the duct or pipe (1) about the axis (0) with sinusoidal oscillation of small amplitude. Taking w as the instantaneous value of velocity averaged at A, the thrust on the relative surface is fundamentally controlled by the relationship

$$F_A = Q(v-w)$$

where Q is the mass flow rate relative to the surface considered, and v is the velocity of the particles at the impact time; for the surface B, we have equally

$$F_B = Q(v+w)$$

Taking r as the lever arm with respect to the rotation axis (0), the instantaneous value C of the torque of the oscillatory motion is given by

$$C = r(F_A - F_B) = -2rQw$$

where r and w are known. The measurement of the torque or of a parameter linked to the same thus allows a direct measurement of the flow rate to be performed.

It is to be remarked that for the sake of simplicity, a fully symmetrical distribution has been hypothesized of total stream in the two flows of the surfaces A and B. When that hypothesis is not valid, two cases can be distinguished:

- irregularities of an erratic character whose effect disappears by performing a suitable time average of the signal;
- irregularities of a systematic character whose effect disappears by processing the signal so as to remove the component which is constant and is not related to the constrained periodic motion.

Again it is to be remarked that for the sake of simplicity the torque due to the momentum of the transport fluid has been hypothesized as negligible, whose effects on the measurement can also be eliminated.

The present invention will be disclosed in the following with reference to Figure 2 herein enclosed, which shows a preferred practical embodiment which is presented just for illustrative and not for limitative purposes, as some technical and structural variants can be practically realized without departing from the scope of the present invention as claimed, in which figure the cross-sectional view is shown perpendicular to the axis of motion of the plate (a) as well as the assemblage view of the device itself (b).

In Figure 2, the duct or pipe through which the particulate material flows from top downwards is pointed out with the numeral (1).

The fixed separating member (2) divides the material into two equal streams that impinge onto the two outer upper surfaces of the plate (3).

The device (4) forces the plate (3) having a low moment of inertia to move according to a harmonic oscillatory motion of constant and known values of amplitude and frequency about the axis determined by two pivots (5) on which the plate itself oscillates. The instantaneous value of the torque due to the interaction between the motion of the upper outer surfaces of the plate (3) and that of the particles of the two streams of particulate material is proportional to the mass flow rate of said particulate material because of the reasons mentioned above. Said torque is measured by the strain gauge torque meter (6); the resulting signal is amplified at (7) and then sent to the detector (8), in which a rectifier circuit makes the sinusoidal signal into a unidirectional signal and a successive circuit carries out the calculation of the average value, which is proportional to the torque and hence to the flow rate and is read on the indicator (9).

**Claims**

1. A device for continuously measuring the mass flow rate of particulate material comprising:

   - a duct or pipe (1),
   - a member (3) comprising at least one flat surface, and mounted for oscillation about an axis (0) perpendicular to the longitudinal axis (0') of the duct or pipe;
   - drive means (4) arranged to cause said member (3) to oscillate at a predetermined amplitude and frequency about said axis (0);

- means (6) arranged to measure the instantaneous value of the torque arising from the interaction between the motion of said member (3) and that of the particles of said particulate material impinging thereon, and

- means (7, 8, 9) for processing said signal, characterized in that

- said member (3) comprises two plate-like parts (3a,3b), each having a flat surface, said parts (3a,3b) being rigidly connected to one another along a line (0) which is also the axis of oscillation of said member (3), said parts (3a,3b) respectively sloping at an angle of from 2° to 30° away of a plane containing both the longitudinal axis (O') of the pipe (1) ) and said axis of oscillation (O), said duct or pipe comprising an upstream and a downstream portion of a predetermined cross-sectional area and an intermediate portion therebetween, having a cross sectional area larger than said predetermined cross sectional area,

said member being mounted within said intermediate portion and being dimensioned to extend across said intermediate portion to occupy at least said predetermined cross sectional area,

a baffle (2) arranged upstream of said member (3) relative to the direction of flow of said particulate material to split the mass of said particulate material into two equal streams,

said baffle being of substantially triangular cross section in a plane parallel to the axis of the duct or pipe and perpendicular to the axis of oscillation of the member, and said baffle extending at its apex into said upstream portion of the duct or pipe.

2. Device according to claim 1, characterised in that the oscillatory motion has both constant amplitude and frequency.

3. Device according to claim 1, characterised in that the oscillatory motion is sinusoidal.

4. Device according to claim 3, characterised in that said half-width of the apex angle between said plate-like parts (3a, 3b) is of from 2° to 8°.

**Patentansprüche**

1. Einrichtung zur kontinuierlichen Messung des Massendurchflusses von teilchenförmigem Material beinhaltend:

- eine Leitung oder Röhre (1),

- ein um eine auf die Längsachse (0') der Leitung oder Röhre senkrecht stehende Achse (0) schwingungsfähig befestigtes Glied (3), das wenigstens eine ebene Oberfläche aufweist;

- eine Antriebsvorrichtung (4), die so eingerichtet ist, daß sie das Glied (3) in Schwingung mit vorgegebener Amplitude und Frequenz um die Achse (0) versetzt;

- eine Vorrichtung (6), die so eingerichtet ist, daß sie den Istwert des sich aus der Wechselwirkung zwischen der Bewegung des Glieds (3) und jener der Teilchen des auf dasselbe auftreffenden teilchenförmigen Materials ergebenden Drehmoments mißt, sowie

- Vorrichtungen (7, 8, 9) zur Verarbeitung des Signals,

dadurch gekennzeichnet, daß das Glied (3) zwei plattenförmige Teile (3a, 3b) umfaßt, die jeweils eine ebene Oberfläche aufweisen und entlang einer Linie (0), die gleichzeitig die Schwingungsachse des Gliedes (3) darstellt, starr verbunden sind, wobei die Teile (3a, 3b) jeweils unter einem Winkel von 2° bis 30° von einer Ebene weggeneigt sind, die sowohl die Längsachse (0') der Röhre (1) als auch die Schwingungsachse (0) enthält, wobei die Leitung oder Röhre einen vorgeschalteten und einen nachgeschalteten Teil mit vorgegebener Querschnittsfläche und dazwischen einen Zwischenteil umfaßt, dessen Querschnittsfläche größer ist als die vorgegebene Querschnittsfläche,

wobei das Glied innerhalb des Zwischenteils befestigt und so bemessen ist, daß es sich über den Zwischenteil erstreckt und dabei mindestens die vorgegebene Querschnittsfläche einnimmt,

ein Ablenkkörper (2) stromaufwärts, bezogen auf die Strömungsrichtung des teilchenförmigen Materials, des Gliedes (3) so angeordnet ist, daß er die Masse des teilchenförmigen Materials in zwei gleiche Ströme aufteilt,

wobei der Ablenkkörper einen im wesentlichen dreieckigen Querschnitt in einer zur Achse der Leitung oder Röhre parallelen und auf die Schwingungsachse des Gliedes senkrecht stehenden Ebene aufweist und sich an seiner Spitze in den vorgeschalteten Teil der Leitung oder Röhre erstreckt.

2. Einrichtung nach Anspruch 1, dadurch gekennzeichnet, daß die Schwingungsbewegung sowohl eine konstante Amplitude als auch eine konstante Frequenz besitzt.

3. Einrichtung nach Anspruch 1, dadurch gekennzeichnet, daß die Schwingungsbewegung sinusförmig ist.

4. Einrichtung nach Anspruch 3, dadurch gekennzeichnet, daß die halbe Breite des Öffnungswinkels zwischen den plattenförmigen Teilen (3a, 3b) 2° bis 8° beträgt.

**Revendications**

1. Dispositif pour mesurer en continu le débit massique d'une matière en particules, comprenant:

   - un conduit ou tuyau (1);
   - un élément (3) comprenant au moins une surface plate, et monté en vue d'une oscillation autour d'un axe (0) perpendiculaire à l'axe longitudinal (0') du conduit ou tuyau;
   - un moyen d'entraînement (4) agencé de manière à faire osciller ledit élément (3) à une amplitude et à une fréquence prédéterminées autour dudit axe (0);
   - un moyen (6) agencé de manière à mesurer la valeur instantanée du couple provenant de l'interaction entre le mouvement dudit élément (3) et celui des particules de ladite matière en particules tombant sur cet élément; et
   - des moyens (7, 8, 9) pour traiter ledit signal, caractérisé en ce que:
   - ledit élément (3) comprend deux pièces analogues à des plaques (3a, 3b), comportant chacune une surface plate, lesdites pièces (3a, 3b) étant accouplées rigidement l'une à l'autre le long d'une ligne (0) qui est aussi l'axe d'oscillation dudit élément (3), lesdites pièces (3a,3b) s'inclinant, respectivement, d'un angle compris entre 2° et 30° en s'éloignant d'un plan contenant à la fois l'axe longitudinal (0') du tuyau (1) et ledit axe d'oscillation (0), ledit conduit ou tuyau comprenant une partie amont et une partie aval d'une superficie de section droite prédéterminée et, entre ces parties, une partie intermédiaire ayant une superficie de section droite plus grande que ladite superficie de section droite prédéterminée;

   ledit élément étant monté à l'intérieur de ladite partie intermédiaire et étant dimensionné de manière à s'étendre en travers de ladite partie intermédiaire pour occuper au moins ladite superficie de section droite prédéterminée,
   un déflecteur (2) disposé en amont dudit élément (3) par rapport à la direction d'écoulement dudit matériau en particule de manière à diviser la masse de ladite matière en particules en deux courants égaux;
   ledit déflecteur ayant une section droite sensiblement triangulaire dans un plan parallèle à l'axe du conduit ou tuyau et perpendiculaire à l'axe d'oscillation de l'élément, et ledit déflecteur s'étendant, à son sommet, jusque dans ladite partie amont du conduit ou tuyau.

2. Dispositif selon la revendication 1, caractérisé en ce que le mouvement oscillant a une amplitude et une fréquence toutes les deux constantes.

3. Dispositif selon la revendication 1, caractérisé en ce que le mouvement oscillant est sinusoïdal.

4. Dispositif selon la revendication 3, caractérisé en ce que ladite demi-largeur de l'angle au sommet entre lesdites pièces analogue à des plaques (3a, 3b) est compris entre 2° et 8°.

Fig.2(a)

Fig.2(b)

Fig.1

EP 0 321 016 B1